(19)

**Europäisches Patentamt**
**European Patent Office**
**Office européen des brevets**

(11)   **EP 4 564 636 A1**

(12)   **EUROPEAN PATENT APPLICATION**

(43) Date of publication:
**04.06.2025  Bulletin 2025/23**

(21) Application number: **24205135.7**

(22) Date of filing: **08.10.2024**

(51) International Patent Classification (IPC):
**H02J 3/32** (2006.01)    **H02J 7/00** (2006.01)

(52) Cooperative Patent Classification (CPC):
**H02J 3/32; H02J 7/0013; H02J 7/00712**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.12.2023  TW 112146830**

(71) Applicant: **APh ePower Co., Ltd.
Kaohsiung City 821 (TW)**

(72) Inventors:
• **CHEN, Syuan-Yi
821 Kaohsiung City (TW)**

• **WU, Chih-Ting
821 Kaohsiung City (TW)**
• **CHEN, Chi-Cheng
821 Kaohsiung City (TW)**
• **SU, Hsiu-Hsien
821 Kaohsiung City (TW)**
• **HUANG, Shang-Zeng
821 Kaohsiung City (TW)**

(74) Representative: **Becker, Eberhard
Becker Kurig & Partner
Patentanwälte mbB
Bavariastraße 7
80336 München (DE)**

(54)   **CONTROLLER AND POWER MANAGEMENT METHOD FOR COMPOSITE POWER SYSTEM**

(57)   A controller (100) and a power management method (S100) for first and second energy storage devices (PS1, PS2) are provided. The controller (100) includes: a computing circuit (110) that provides an operating time constant ($\tau$R) corresponding to a minimum input power (Jmin) based on a current demand power (PD) and current SOCs (SOC1, SOC2) of the first and second energy storage devices (PS1, PS2); a low-pass filter circuit (120) that extracts a low-frequency part (PL) of a power demand command (CMD) based on the operating time constant ($\tau$R); and a power control circuit (130) that extracts a high-frequency part (PH) of the power demand command (CMD) of the low-frequency part (PL) and controls the first and second energy storage devices (PS1, PS2) to provide first and second electric energies (PW1, PW2) in response to the low-frequency part (PL) and the high-frequency part (PH).

FIG. 1

## Description

## BACKGROUND

Technical Field

The disclosure relates to a controller and a power management method, and particularly relates to a controller and a power management method for a composite power system.

Description of Related Art

A composite power system may be, for example, a vehicle with at least two driving electric energies. The composite power system can be an electric vehicle, an electric unmanned vehicle, or an electric boat. The current power management method can use the frequency decoupling method to adjust the electric energy output distribution of the composite power system. The frequency decoupling method can separate the power signal into a high-frequency component and a low-frequency component based on a time constant, use the low-frequency component to control an electric energy output of a first energy storage device of the composite power system, and use the high-frequency component to control an electric energy output of a second energy storage device of the composite power system.

However, the prevailing time constant is constant. Therefore, the current frequency decoupling method cannot provide an optimal electric energy output distribution under different conditions of acceleration, deceleration, or high-speed driving of the composite power system. In addition, the current frequency decoupling method cannot adjust the time constant based on a health status of the first energy storage device and the second energy storage device of the composite power system.

It can be seen that in order to make the composite power system have a better electric energy output distribution mechanism, a novel power management method needs to be proposed.

## SUMMARY

The disclosure provides a controller and a power management method for a composite power system. The controller and the power management method can provide a better electric energy output distribution mechanism.

A controller of the disclosure is used in a composite power system. The composite power system includes a first energy storage device and a second energy storage device. The controller includes a computing circuit, a low-pass filter circuit, and a power control circuit. The computing circuit receives a plurality of predetermined demand powers, a plurality of first predetermined states of charge of the first energy storage device, a plurality of second predetermined states of charge of the second energy storage device, and a plurality of predetermined time constants. The computing circuit generates a management function using the plurality of predetermined time constants, the plurality of predetermined demand powers, the plurality of first predetermined states of charge, and the plurality of second predetermined states of charge. The computing circuit receives a power demand command from the composite power system to obtain a current demand power, obtains a minimum input power from the management function based on the current demand power, a first current state of charge of the first energy storage device, and a second current state of charge of the second energy storage device, and provides at least one operating time constant corresponding to the minimum input power from the plurality of predetermined time constants. The low-pass filter circuit is coupled to the computing circuit. The low-pass filter circuit receives the at least one operating time constant and the power demand command, and extracts a low-frequency part of the power demand command based on the at least one operating time constant. The power control circuit is coupled to the low-pass filter circuit. The power control circuit controls the first energy storage device to provide a first electric energy in response to the low-frequency part, subtracts the low-frequency part from the power demand command to extract a high-frequency part of the power demand command, and controls the second energy storage device to provide a second electric energy in response to the high-frequency part.

A power management method of the disclosure is used in a composite power system. The composite power system includes a first energy storage device and a second energy storage device. The power management method includes the following steps. A plurality of predetermined demand powers, a plurality of first predetermined states of charge of the first energy storage device, a plurality of second predetermined states of charge of the second energy storage device, and a plurality of predetermined time constants are received. A management function is generated using the plurality of predetermined time constants, the plurality of predetermined demand powers, the plurality of first predetermined states of charge, and the plurality of second predetermined states of charge. A power demand command is received from the composite power system to obtain a current demand power, a minimum input power is obtained from the management function based on the current demand power, a first current state of charge of the first energy storage device, and a second current state of charge of the second energy storage device, and at least one operating time constant corresponding to the minimum input power is provided from the plurality of predetermined time constants. A low-frequency part of the power demand command is extracted based on the at least one operating time constant, and the first energy storage device is controlled to provide a first electric energy in response to the low-frequency part. The low-frequency part is subtracted from the power demand command to extract a high-frequency part of the power demand command, and the second energy storage device is controlled to provide a second electric energy in response to the high-frequency part.

Based on the above, the controller and the power management method generate the management function to obtain the operating time constant corresponding to the minimum input power based on the current demand power, the first current state of charge, and the second current state of charge. Therefore, the controller and the power management method perform the electric energy output distribution between the first energy storage device and the second energy storage device using the operating time constant. It should be noted that the operating time constant is related to the current demand power, the first current state of charge, and the second current state of charge. Therefore, the disclosure can dynamically perform the electric energy output distribution between the first energy storage device and the second energy storage device based on the current demand power, the state of the first energy storage device, and the state of the second energy storage device.

## BRIEF DESCRIPTION OF THE DRAWINGS

FIG. 1 is a schematic diagram of a composite power system and a controller according to a first embodiment of the disclosure.
FIG. 2 is a schematic diagram of a composite power system and a controller according to a second embodiment of the disclosure.
FIG. 3 is a flowchart of a power management method according to an embodiment of the disclosure.
FIG. 4 is a schematic diagram of an adjustment function according to an embodiment of the disclosure.
FIG. 5 is a schematic diagram of a management function creation loop according to an embodiment of the disclosure.

## DESCRIPTION OF THE EMBODIMENTS

Some embodiments of the disclosure will be described in detail below with reference to the drawings. When the same reference numerals appear in different drawings, the reference numerals in the following description will be regarded as referring to the same or similar elements. The embodiments are only a part of the disclosure and do not disclose all the possible implementations of the disclosure. More precisely, the embodiments are only examples within the protection scope of the disclosure.

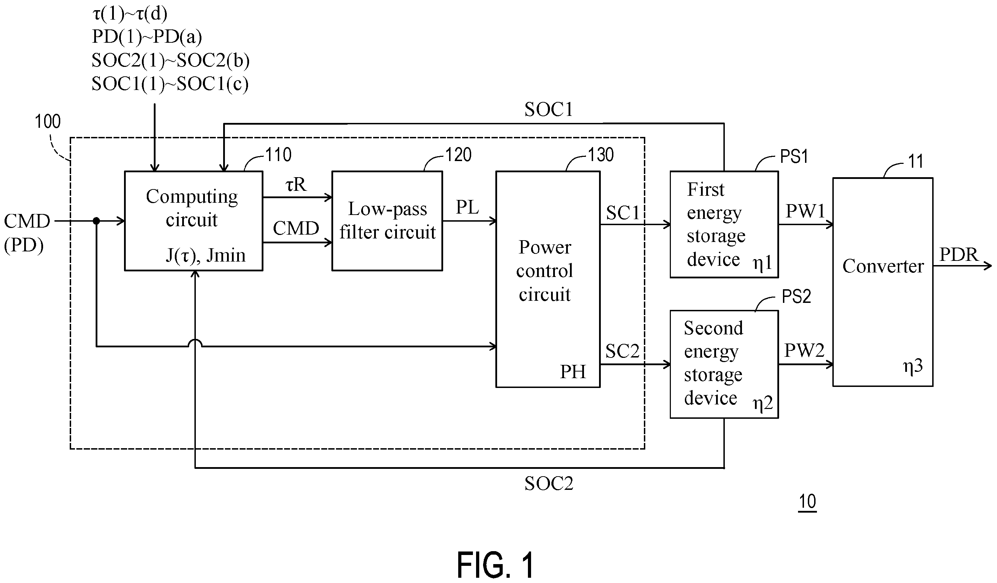

Referring to FIG. 1, FIG. 1 is a schematic diagram of a composite power system and a controller according to a first embodiment of the disclosure. In the embodiment, a composite power system 10 includes a first energy storage device PS1 and a second energy storage device PS2. In the embodiment, the composite power system 10 can be any type of electric vehicle, electric unmanned vehicle, or electric boat, but the disclosure is not limited thereto.

A controller 100 is disposed inside the composite power system 10. The controller 100 is coupled to the first energy storage device PS1 and the second energy storage device PS2. The controller 100 is used in the composite power system 10. Furthermore, the controller 100 is used for electric energy output distribution of the first energy storage device PS 1 and the second energy storage device PS2.

In the embodiment, the controller 100 includes a computing circuit 110, a low-pass filter circuit 120, and a power control circuit 130. The computing circuit 110 receives a plurality of different predetermined demand powers PD(1) to PD(a), a plurality of different first predetermined states of charge (SOC) SOC1(1) to SOC1(c) for the first energy storage device PS1, a plurality of different second predetermined states of charge SOC2(1) to SOC2(b) for the second energy storage device PS2, and a plurality of predetermined time constants $\tau(1)$ to $\tau(d)$. The computing circuit 110 generates a management function $J(\tau)$ using the predetermined time constants $\tau(1)$ to $\tau(d)$, the predetermined demand powers PD(1) to PD(a), the first predetermined states of charge SOC1(1) to SOC1(c), and the second predetermined states of charge SOC2(1) to SOC2(b). In the embodiment, "a", "b", "c" and "d" are respectively positive integers greater than 1.

In the embodiment, the computing circuit 110 receives a power demand command CMD from the composite power system 10 to obtain a current demand power PD. The computing circuit 110 obtains a minimum input power Jmin from the management function $J(\tau)$ based on the current demand power PD, a current state of charge SOC1 of the first energy storage device PS1 and a current state of charge SOC2 of the second energy storage device PS2. The minimum input power Jmin is a lowest power among a plurality of total input powers corresponding to the current demand power PD and the current states of charge SOC1 and SOC2 in the management function $J(\tau)$. Next, the computing circuit 110 provides an operating time constant $\tau R$ corresponding to the minimum input power Jmin from the predetermined time constants $\tau(1)$ to $\tau(d)$.

In the embodiment, the low-pass filter circuit 120 is coupled to the computing circuit 110. The low-pass filter circuit 120 receives the operating time constant $\tau R$ and the power demand command CMD, and extracts a low-frequency part PL of the power demand command CMD based on the operating time constant $\tau R$.

In the embodiment, the power control circuit 130 is coupled to the low-pass filter circuit 120. The power control circuit 130 controls the first energy storage device PS1 to provide a first electric energy PW1 in response to the low-frequency part PL. The power control circuit 130 subtracts the low-frequency part PL from the power demand command CMD to extract a high-frequency part PH of the power demand command CMD, and controls the second energy storage device PS2 to provide a second electric energy PW2 in response to the high-frequency part PH.

Based on the above, the computing circuit 110 can establish the management function $J(\tau)$ and provide the operating time constant $\tau R$ based on the power demand command CMD and the current states of charge SOC1 and SOC2. The low-pass filter circuit 120 and the power control circuit 130 perform frequency decoupling control on the first energy storage device PS1 and the second energy storage device PS2 based on the operating time constant $\tau R$.

For example, when the operating time constant $\tau R$ is smaller, the cutoff frequency of the low-pass filter circuit 120 is higher. The more the low-frequency part PL, the less the high-frequency part PH. Therefore, the first energy storage device PS1 is controlled to provide the first electric energy PW1 with a higher proportion. The second energy storage device PS2 is controlled to provide the second electric energy PW2 with a lower proportion. When the operating time constant $\tau R$ is larger, the cutoff frequency of the low-pass filter circuit 120 is lower. The less the low-frequency part PL, the more the high-frequency part PH. Therefore, the first energy storage device PS1 is controlled to provide the first electric energy PW1 with a lower proportion. The second energy storage device PS2 is controlled to provide the second electric energy PW2 with a higher proportion. In the embodiment, the current demand power PD is equal to a sum of a first output power of the first electric energy PW1 and a second output power of the second electric energy PW2.

It is worth mentioning here that the operating time constant $\tau R$ is related to the current demand power PD and the current states of charge SOC1 and SOC2. In this way, the controller 100 can dynamically perform the electric energy output distribution between the first energy storage device PS 1 and the second energy storage device PS2 based on the current demand power PD, the device status of the first energy storage device PS1, and the device status of the second energy storage device PS2.

It should be understood that the operating time constant $\tau R$ corresponds to the minimum input power Jmin. Therefore, the above-mentioned electric energy output distribution enables the composite power system 10 to have the highest composite efficiency for providing the current demand power PD.

In the embodiment, the first energy storage device PS1 may be an energy storage device with high energy density. Furthermore, the first energy storage device PS1 can store relatively high electric energy within a unit volume. The first energy storage device PS1 may be, for example, a lithium electronic battery device. The second energy storage device PS2 may be an energy storage device with high power density. Furthermore, the second energy storage device PS2 can provide higher power within a unit volume. The second energy storage device PS2 may be, for example, one of a supercapacitor device and an aluminum electronic battery device.

For ease of explanation, the embodiment uses a single operating time constant $\tau R$ as an example. However, the disclosure is not limited to the number of the operating time constant $\tau R$. In some embodiments, the computing circuit 110 may provide a plurality of different operating time constants $\tau R$. The computing circuit 110 may provide the plurality of different operating time constants $\tau K$. The low-pass filter circuit 120 extracts the low-frequency part PL of the power demand command CMD based on the plurality of different operating time constants $\tau R$.

In the embodiment, the composite power system 10 further includes a converter 11. The converter 11 is coupled to the first energy storage device PS1 and the second energy storage device PS2. The converter 11 converts at least one of the first electric energy PW1 and the second electric energy PW2 into a driving electric energy PDR. The driving electric energy PDR is used to drive the composite power system 10. For example, the driving electric energy PDR can drive a motor or other braking devices of the composite power system 10. The converter 11 is implemented by a DC-DC power converter, for example, but the disclosure is not limited thereto.

In the embodiment, the power control circuit 130 may control the first energy storage device PS1 using a first control signal SC1 and control the second energy storage device PS2 using a second control signal SC2.

In the embodiment, the computing circuit 110 is, for example, a central processing unit (CPU), a device equipped with artificial intelligence (AI) functions, or any other programmable general-purpose or special-purpose microprocessor, a digital signal processor (DSP), a programmable controller, an application specific integrated circuit (ASIC), a programmable logic device (PLD), or other similar devices, or a combination thereof, which may load and execute a computer program.

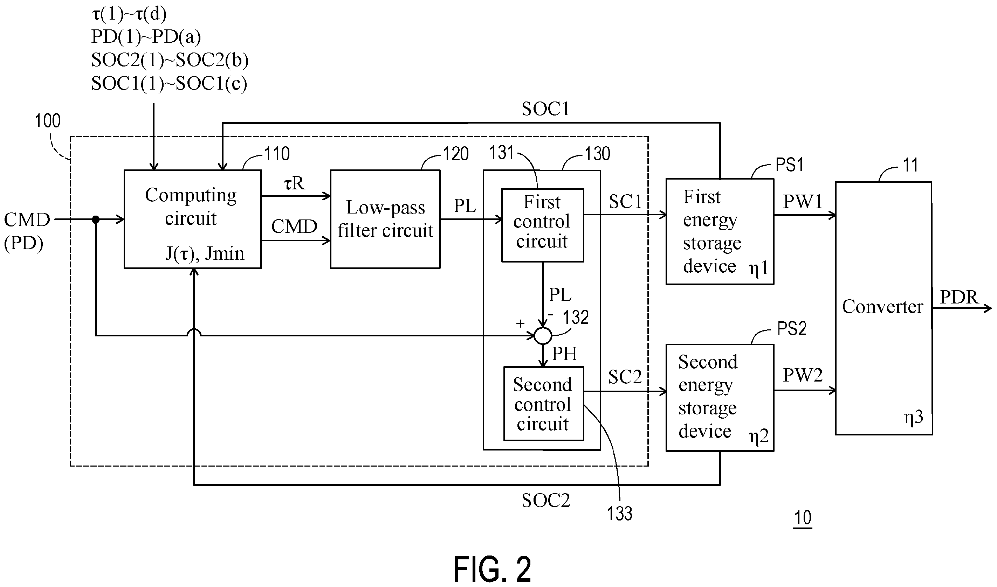

Referring to FIG. 2, FIG. 2 is a schematic diagram of a composite power system and a controller according to a second embodiment of the disclosure. In the embodiment, the power control circuit 130 includes a first control circuit 131, a subtractor 132, and a second control circuit 133. The first control circuit 131 is coupled to the low-pass filter circuit 120. The first control circuit 131 generates the first control signal SC 1 based on the low-frequency part PL, and provides the first control signal SC1 to the first energy storage device PS1. The subtractor 132 receives the power demand command CMD

and the low-frequency part PL, and subtracts the low-frequency part PL from the power demand command CMD to extract the high-frequency part PH of the power demand command CMD. The second control circuit 133 is coupled to the subtractor 132. The second control circuit 133 generates the second control signal SC2 based on the high-frequency part PH, and provides the second control signal SC2 to the second energy storage device PS2.

Taking the embodiment as an example, the subtractor 132 can receive the low-frequency part PL and receive the power demand command CMD from the composite power system 10 through the low-pass filter circuit 120 or the first control circuit 131. In some embodiments, the subtractor 132 may receive the power demand command CMD through the computing circuit 110.

In the embodiment, the first energy storage device PS1 outputs the first electric energy PW1 in response to the first control signal SC1. The second energy storage device PS2 outputs the second electric energy PW2 in response to the second control signal SC2.

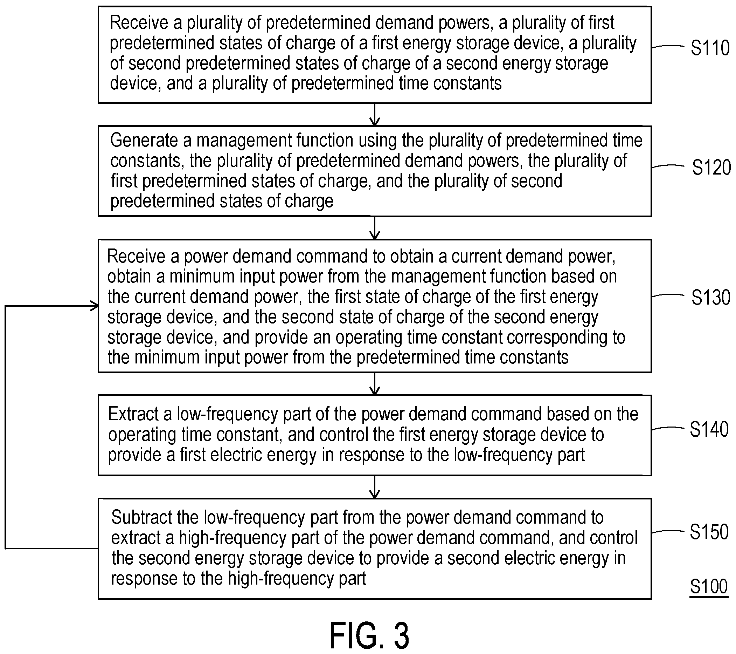

Referring to FIG. 1 and FIG. 3 at the same time, FIG. 3 is a flowchart of a power management method according to an embodiment of the disclosure. In the embodiment, a power management method S100 is applicable to the composite power system 10. The power management method S100 includes steps S110 to S150. In step S110, the computing circuit 110 receives the predetermined demand powers PD(1) to PD(a), the first predetermined states of charge SOC1(1) to SOC1(c), the second predetermined states of charge SOC2(1) to SOC2(b), and the predetermined time constants $\tau(1)$ to $\tau$(d).

In step S120, the computing circuit 110 generates the management function $J(\tau)$ using the predetermined time constants $\tau(1)$ to $\tau$(d), the predetermined demand powers PD(1) to PD(a), the first predetermined states of charge SOC1(1) to SOC1(c), and the second predetermined states of charge SOC2(1) to SOC2(b).

In the embodiment, steps S110 and S120 may be steps for establishing the management function $J(\tau)$.

In step S130, the computing circuit 110 receives the power demand command CMD from the composite power system 10 to obtain the current demand power PD. The computing circuit 110 obtains the minimum input power Jmin from the management function $J(\tau)$ based on the current demand power PD, the current state of charge SOC1 of the first energy storage device PS1, and the current state of charge SOC2 of the second energy storage device PS2. The computing circuit 110 provides the operating time constants $\tau$R corresponding to the minimum input power Jmin from the predetermined time constants $\tau(1)$ to $\tau$(d) in step S130.

In step S140, the low-pass filter circuit 120 extracts the low-frequency part PL of the power demand command CMD based on the plurality of different operating time constants $\tau$K. The power control circuit 130 controls the first energy storage device PS1 to provide the first electric energy PW1 in response to the low-frequency part PL. In step S150, the power control circuit 130 subtracts the low-frequency part PL from the power demand command CMD to extract the high-frequency part PH of the power demand command CMD, and controls the second energy storage device PS2 to provide the second electric energy PW2 in response to the high-frequency part PH.

In the embodiment, steps S130 to S150 may be frequency decoupling control steps.

The following is an example of how the management function $J(\tau)$ is generated.

Returning to the embodiment of FIG. 1, in the embodiment, the first output power of the first electric energy PW1 is determined by at least one of the predetermined time constants $\tau(1)$ to $\tau$(d) and the current demand power PD. The value of the second output power of the second electric energy PW2 is equal to the difference between the current demand power PD and the first output power. The first output power can be obtained by formulas (1) to (3). The second output power can be obtained by formula (4).

$$H(s) = \frac{\omega}{s+\omega} = \frac{1}{\tau s+1} \cdots \text{formula (1)}$$

$$fc = \frac{1}{2\pi\tau} \cdots \text{formula (2)}$$

$$PO1 = \frac{1}{\tau s+1} \times PD \cdots \text{formula (3)}$$

$$PO2 = PD - PO1 \dots \text{formula (4)}$$

H(s) is the transfer function of the low-pass filter circuit 120. "s" is the frequency parameter of the Laplace transform. fc is the cutoff frequency, $\tau$ is one of predetermined time constants $\tau(1)$ to $\tau$(d). Therefore, a first output power PO1 of the first electric energy PW1 may be the conversion result of the current demand power PD by the low-pass filter circuit 120. Furthermore, the power demand command CMD is a signal including the high-frequency part PH and the low-frequency part PL. The low-frequency part PL is the driving information related to the first output power PO1. Therefore, the low-pass filter circuit 120 can extract the low-frequency part PL based on the transfer function. The power control circuit 130 may control the first energy storage device PS1 using the first control signal SC1, so that the first energy storage device PS1 outputs the first electric energy PW1 having the first output power PO I.

The high-frequency part PH is the driving information related to a second output power PO2. Therefore, based on the high-frequency part PH, the power control circuit 130 may control the second energy storage device PS2 using the second control signal SC2, so that the second energy storage device PS2 outputs the second electric energy PW2 having the second output power PO2.

After understanding how the first output power PO1 and the second output power PO2 are generated, the management function $J(\tau)$ can be established based on formulas (5) to (8).

$$\mathrm{Pdis1} = \frac{\varphi1 \times PO1}{\eta1 \times \eta3} \cdots \text{formula (5)}$$

$$\mathrm{Pdis2} = \frac{C2 \times \varphi2 \times PO2}{\eta2 \times \eta3} \cdots \text{formula (6)}$$

$$\mathrm{Pch} = C1 \times \varphi3 \times \eta2 \times \eta3 \times PO2 \cdots \text{formula (7)}$$

$$\mathrm{J}(\tau) = \mathrm{Pch} + \mathrm{Pdis2} + \mathrm{Pdis1} \cdots \text{formula (8)}$$

Pdis1 is the first input power. $\eta1$ is the efficiency of the first energy storage device PS1. $\eta2$ is the efficiency of the second energy storage device PS2. $\eta3$ is the conversion efficiency of the converter, $\varphi1$ to $\varphi3$ are adjustment functions respectively. C1 and C2 are constants respectively. Based on formula (5), the computing circuit 110 obtains the first input power Pdis1 based on the first output power PO1, the efficiency $\eta1$ of the first energy storage device PS1, the conversion efficiency $\eta3$ of the converter 11, and the adjustment function $\varphi1$.

Based on formula (6), the computing circuit 110 obtains a second input power Pdis2 based on the second output power PO2, the efficiency $\eta2$ of the second energy storage device PS2, the conversion efficiency $\eta3$ of the converter 11, and the adjustment function $\varphi2$.

Based on formula (7), the computing circuit 110 generates a charging power Pch based on the second output power PO2, the efficiency $\eta2$ of the second energy storage device PS2, the conversion efficiency $\eta3$ of the converter 11, and the adjustment function $\varphi3$.

In the embodiment, the efficiency $\eta1$ of the first energy storage device PS1 and the adjustment function $\varphi1$ are respectively associated with the state of charge of the first energy storage device PS1. In other words, the efficiency $\eta1$ of the first energy storage device PS1 and the adjustment function $\varphi1$ will change as the state of charge of the first energy storage device PS1 changes.

The efficiency $\eta2$ of the second energy storage device PS2 and the adjustment functions $\varphi2$ and $\varphi3$ are respectively associated with the state of charge of the second energy storage device PS2. In other words, the efficiency $\eta2$ of the second energy storage device PS2 and the adjustment functions $\varphi2$ and $\varphi3$ will change as the state of charge of the second energy storage device PS2 changes.

Based on formula (8), the computing circuit 110 sums the first input power Pdis1, the second input power Pdis2, and the charging power Pch to generate one of the plurality of total input powers in the management function $J(\tau)$.

In the embodiment, the efficiency $\eta1$ of the first energy storage device PS1 can be obtained by the manufacturer of the first energy storage device PS1. The efficiency $\eta2$ of the second energy storage device PS2 can be obtained by the manufacturer of the second energy storage device PS2.

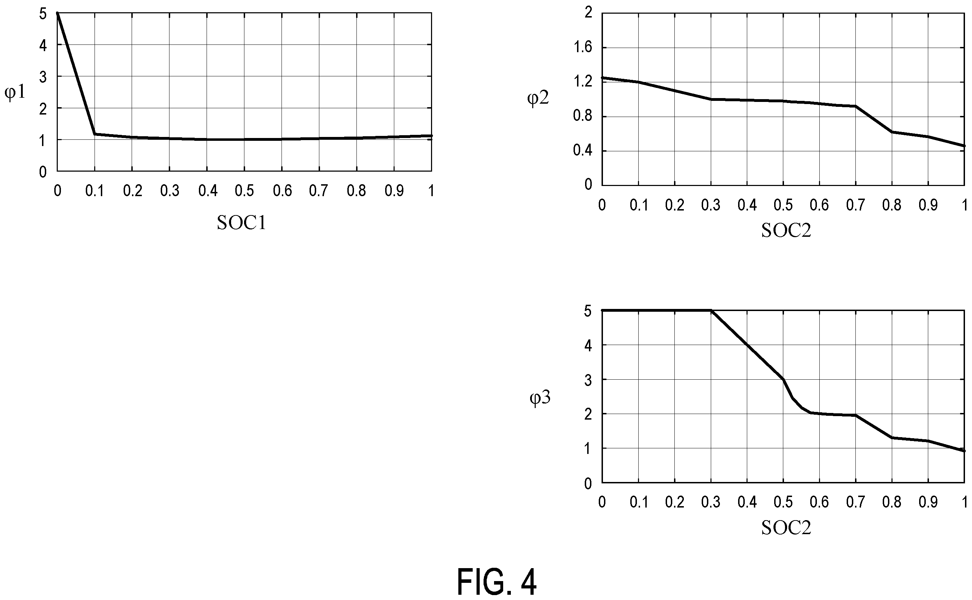

Referring to FIG. 1 and FIG. 4 at the same time, FIG. 4 is a schematic diagram of an adjustment function according to an embodiment of the disclosure. In the embodiment, FIG. 4 shows the relationship between the adjustment function $\varphi1$ and the current state of charge SOC1 of the first energy storage device PS1 and the relationship between the adjustment functions $\varphi2$ and $\varphi3$ and the current state of charge SOC2 of the second energy storage device PS2. When the current state of charge SOC1 is lower than a set value (such as 0.1 or 10%), the adjustment function $\varphi1$ will increase as the current state of charge SOC1 decreases. The adjustment functions $\varphi2$ and $\varphi3$ will increase as the current state of charge SOC2 decreases. It should be noted that, from formulas (5) to (8), it can be seen that when the value of at least one of the adjustment functions $\varphi1$, $\varphi2$, and $\varphi3$ increases and the values of the other adjustment functions remain unchanged, the value of the management function $J(\tau)$ will also increase.

For example, when the current state of charge SOC2 of the second energy storage device PS2 is too low, it means that the second energy storage device PS2 is not suitable for power supply. At this time, the adjustment functions cp2 and cp3 will be high. If the second energy storage device PS2 is charged, since the charging power PO2 is a negative value, the value of the management function J(τ) will decrease. Therefore, when the current state of charge SOC2 is too low, the strategy of charging the second energy storage device PS2 will be a priority strategy. On the other hand, when the current state of charge SOC2 is high (for example, 0.8 or 80%), the adjustment functions φ2 and φ3 at this time will be low, and the charging power PO2 will be positive. When the current state of charge SOC2 is high, supplying power to the second energy storage device PS2 is a priority strategy.

For example, when the current state of charge SOC1 of the first energy storage device PS1 is too low, the adjustment function φ1 at this time will be high. The value of the management function J(τ) is also high. Therefore, when the current state of charge SOC1 is too low, the strategy of supplying power to the first energy storage device PS1 is not a priority strategy. On the other hand, when the current state of charge SOC1 is high, the adjustment function φ1 at this time is approximately equal to 1. At this time, the strategy of supplying power to the first energy storage device PS1 is a priority strategy.

Based on the above, the settings of the adjustment functions φ1, φ2, and φ3 determine the electric energy output distribution strategy.

In some embodiments, the adjustment functions φ1, φ2, and φ3 may be adjusted based on actual design requirements. For example, the adjustment function φ3 can increase as the current state of charge SOC2 decreases. Therefore, when the current state of charge SOC2 is low, the strategy of charging the second energy storage device PS2 by the first energy storage device PS1 is a priority strategy.

Returning to the embodiment of FIG. 1, in the embodiment, when the second energy storage device PS2 is charged, the converter 11 receives the first electric energy PW1 and uses the first electric energy PW1 to charge the second energy storage device PS2. At this time, a constant C1 is equal to "1". A constant C2 is equal to "0". Therefore, when the second energy storage device PS2 is charged, the second input power Pdis2 is equal to zero. When the first energy storage device PS1 outputs the first electric energy PW1 and the second energy storage device PS2 outputs the second electric energy PW2, the constant C1 is equal to "0". The constant C2 is equal to "1". Therefore, the charging power Pch is equal to zero.

In some embodiments, the management function J(τ) may be established based on formula (9). Compared with formula (8), formula (9) increases a penalty value γ.

$$J(\tau) = Pch + Pdis2 + Pdis1 + \gamma \cdots \text{formula (9)}$$

The computing circuit 110 determines whether the input powers in the management function J(τ) exceed a reasonable range. For example, when the first input power among the plurality of input powers in the management function J(τ) exceeds a reasonable range, it means that the first input power is an unreasonable operation result. Therefore, the penalty value γ is equal to "106", for example (however, the disclosure is not limited thereto). Therefore, the first input power is ignored. On the other hand, when the first input power is within a reasonable range, the penalty value γ is, for example, equal to "0".

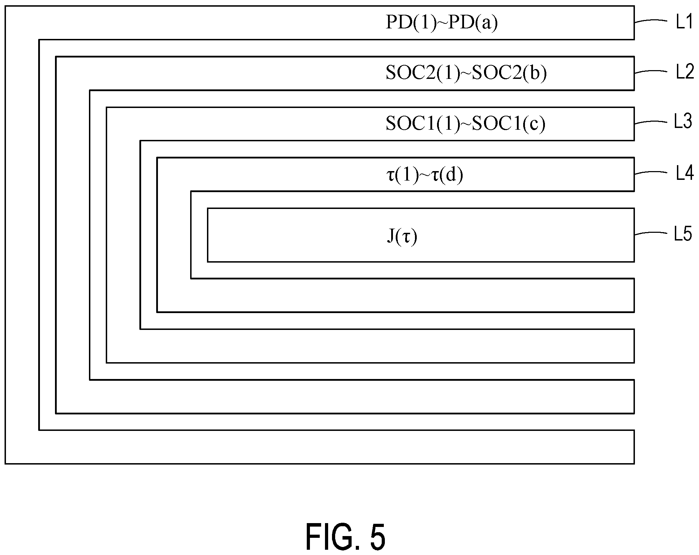

Referring to FIG. 1 and FIG. 5 at the same time, FIG. 5 is a schematic diagram of a management function creation loop according to an embodiment of the disclosure. The computing circuit 110 receives the predetermined demand powers PD(1) to PD(a) in a loop L1. The computing circuit 110 receives the different second predetermined states of charge SOC2(1) to SOC2(b) in a loop L2. The computing circuit 110 receives the plurality of different first predetermined states of charge SOC1(1) to SOC1(c) for the first energy storage device PS1 in a loop L3. The computing circuit 110 receives the plurality of predetermined time constants τ(1) to τ(d) in a loop L4. In the loop L4, as shown in formulas (1) to (4), the predetermined time constants τ(1) to τ(d) respectively determine a plurality of first output powers PO1 and a plurality of second output powers PO2 associated with the predetermined demand powers PD(1) to PD(a).

In loop L5, based on (5) to (8) or (5) to (7) and (9), the computing circuit 110 calculates a plurality of input powers in the management function J(τ). In the embodiment, through the global search algorithm (GSA) or the evolutionary algorithm, the computing circuit 110 generates the management function J(τ) using the predetermined time constants τ(1) to τ(d), the predetermined demand powers PD(1) to PD(a), the first predetermined states of charge SOC1(1) to SOC1(c), and the second predetermined states of charge SOC2(1) to SOC2(b). In other words, the computing circuit 110 uses the global search algorithm (GSA) or the evolutionary algorithm to search for combinations of various parameters, and by evaluating the optimal electric energy output distribution results for each combination of input power.

In summary, the controller and the power management method generate the management function to obtain the operating time constant corresponding to the minimum input power based on the current demand power, the first current state of charge, and the second current state of charge. Therefore, the controller and the power management method perform the electric energy output distribution between the first energy storage device and the second energy storage device using the operating time constant. It should be noted here that the operating time constant is related to the current demand power, the first current state of charge, and the second current state of charge. In this way, the composite power system can dynamically perform the electric energy output distribution between the first energy storage device and the second energy storage device based on the current power demand, the state of the first energy storage device, and the state of the second energy storage device.

Although the disclosure has been described with reference to the embodiments above, the embodiments are not intended to limit the disclosure. Any person skilled in the art can make some changes and modifications without departing from the spirit and scope of the disclosure. Therefore, the scope of the disclosure will be defined in the appended claims.

**Claims**

1. A controller (100) for a composite power system (10), wherein the composite power system (10) comprises a first energy storage device (PS1) and a second energy storage device (PS2), the controller (100) comprising:

   a computing circuit (110), configured to:

   receive a plurality of predetermined demand powers (PD(1) to PD(a)), a plurality of first predetermined states of charge (SOC1(1) to SOC1(c)) of the first energy storage device (PS1), a plurality of second predetermined states of charge (SOC2(1) to SOC2(b)) of the second energy storage device (PS2), and a plurality of predetermined time constants ($\tau$(1) to $\tau$(d)),
   generate a management function ($J(\tau)$) using the predetermined time constants ($\tau$(1) to $\tau$(d)), the predetermined demand powers (PD(1) to PD(a)), the first predetermined states of charge (SOC1(1) to SOC1(c)), and the second predetermined states of charge (SOC2(1) to SOC2(b)), and
   receive a power demand command (CMD) from the composite power system (10) to obtain a current demand power (PD), obtain a minimum input power (Jmin) from the management function ($J(\tau)$) based on the current demand power (PD), a first current state of charge (SOC1) of the first energy storage device (PS1), and a second current state of charge (SOC2) of the second energy storage device (PS2), and provide at least one operating time constant ($\tau$R) corresponding to the minimum input power (Jmin) from the predetermined time constants ($\tau$(1) to $\tau$(d));

   a low-pass filter circuit (120), coupled to the computing circuit (110), and configured to receive the at least one operating time constant ($\tau$R) and the power demand command (CMD), and extract a low-frequency part (PL) of the power demand command (CMD) based on the at least one operating time constant ($\tau$R); and
   a power control circuit (130), coupled to the low-pass filter circuit (120), and configured to control the first energy storage device (PS1) to provide a first electric energy (PW1) in response to the low-frequency part (PL), subtract the low-frequency part (PL) from the power demand command (CMD) to extract a high-frequency part (PH) of the power demand command (CMD), and control the second energy storage device (PS2) to provide a second electric energy (PW2) in response to the high-frequency part (PH).

2. The controller (100) according to claim 1, wherein the power control circuit (130) comprises:

   a first control circuit (131), coupled to the low-pass filter circuit (120), and configured to generate a first control signal (SC1) based on the low-frequency part (PL), and provide the first control signal (SC1) to the first energy storage device (PS1);
   a subtractor (132), configured to receive the power demand command (CMD) and the low-frequency part (PL), and subtract the low-frequency part (PL) from the power demand command (CMD) to extract the high-frequency part (PH) of the power demand command (CMD); and
   a second control circuit (133), coupled to the subtractor (132), and configured to generate a second control signal (SC2) based on the high-frequency part (PH), and provide the second control signal (SC2) to the second energy storage device (PS2).

3. The controller (100) according to claim 2, wherein,

   the first energy storage device (PS1) outputs the first electric energy (PW1) in response to the first control signal (SC1), and
   the second energy storage device (PS2) outputs the second electric energy (PW2) in response to the second control signal (SC2).

4. The controller (100) according to claim 1, wherein a first output power of the first electric energy (PW1) is determined by at least one of the predetermined time constants ($\tau$(1) to $\tau$(d)) and the current demand power (PD).

5. The controller (100) according to claim 4, wherein a value of a second output power of the second electric energy (PW2) is equal to a difference between the current demand power (PD) and the first output power.

6. The controller (100) according to claim 5, wherein,

the composite power system (10) also comprises a converter (11),
the converter (11) converts at least one of the first electric energy (PW1) and the second electric energy (PW2) into a driving electric energy (PDR) for driving the composite power system (10), and
the computing circuit (110) is also configured to:

obtain a first input power based on the first output power, an efficiency ($\eta$1) of the first energy storage device (PS1), a conversion efficiency ($\eta$3) of the converter (11), and a first adjustment function ($\varphi$1),
obtain a second input power based on the second output power, an efficiency ($\eta$2) of the second energy storage device (PS2), the conversion efficiency ($\eta$3) of the converter (11), and a second adjustment function ($\varphi$2),
obtain a charging power based on the second output power, the efficiency ($\eta$2) of the second energy storage device (PS2), the conversion efficiency ($\eta$3) of the converter (11), and a third adjustment function ($\varphi$3), and
sum the first input power, the second input power, and the charging power to generate one of a plurality of total input powers of the management function ($J(\tau)$).

7. The controller (100) according to claim 6, wherein,

the efficiency ($\eta$1) of the first energy storage device (PS1) and the first adjustment function ($\varphi$1) are respectively associated with the first current state of charge (SOC1), and
the efficiency ($\eta$2) of the second energy storage device (PS2), the second adjustment function ($\varphi$2), and the third adjustment function ($\varphi$3) are respectively associated with the second current state of charge (SOC2).

8. The controller (100) according to claim 6, wherein when the converter (11) charges the second energy storage device (PS2) using the first electric energy (PW1), the second input power is equal to zero.

9. The controller (100) according to claim 6, wherein when the first energy storage device (PS1) outputs the first electric energy (PW1) and the second energy storage device (PS2) outputs the second electric energy (PW2), the charging power is equal to zero.

10. A power management method (S100) for a composite power system (10), wherein the composite power system (10) comprises a first energy storage device (PS1) and a second energy storage device (PS2), the power management method comprising:

receiving a plurality of predetermined demand powers (PD(1) to PD(a)), a plurality of first predetermined states of charge (SOC1(1) to SOC1(c)) of the first energy storage device (PS1), a plurality of second predetermined states of charge (SOC2(1) to SOC2(b)) of the second energy storage device (PS2), and a plurality of predetermined time constants ($\tau$(1) to $\tau$(d)) (5110);
generating a management function ($J(\tau)$) using the predetermined time constants ($\tau$(1) to $\tau$(d)), the predetermined demand powers (PD(1) to PD(a)), the first predetermined states of charge (SOC1(1) to SOC1(c)), and the second predetermined states of charge (SOC2(1) to SOC2(b)) (S120);
receiving a power demand command (CMD) from the composite power system (10) to obtain a current demand power (PD), obtaining a minimum input power (Jmin) from the management function ($J(\tau)$) based on the current demand power (PD), a first current state of charge (SOC1) of the first energy storage device (PS1), and a second current state of charge (SOC2) of the second energy storage device (PS2), and providing at least one operating time constant ($\tau$R) corresponding to the minimum input power (Jmin) from the predetermined time constants ($\tau$(1) to $\tau$(d)) (S130);
extracting a low-frequency part (PL) of the power demand command (CMD) based on the at least one operating time constant ($\tau$R), and controlling the first energy storage device (PS1) to provide a first electric energy (PW1) in response to the low-frequency part (PL) (S140); and
subtracting the low-frequency part (PL) from the power demand command (CMD) to extract a high-frequency part (PH) of the power demand command (CMD), and controlling the second energy storage device (PS2) to provide a second electric energy (PW2) in response to the high-frequency part (PH) (S150).

11. The power management method (S100) according to claim 10, wherein a first output power of the first electric energy (PW1) is determined by at least one of the predetermined time constants ($\tau(1)$ to $\tau(d)$) and the current demand power (PD).

12. The power management method (S100) according to claim 11, wherein a value of a second output power of the second electric energy (PW2) is equal to a difference between the current demand power (PD) and the first output power.

13. The power management method (S100) according to claim 12, wherein the composite power system (10) further comprises a converter (11), the converter (11) converts at least one of the first electric energy (PW1) and the second electric energy (PW2) into a driving electric energy (PDR) for driving the composite power system (10), and the step of generating the management function ($J(\tau)$) using the predetermined time constants ($\tau(1)$ to $\tau(d)$), the predetermined demand powers (PD(1) to PD(a)), the first predetermined states of charge (SOC1(1) to SOC1(c)), and the second predetermined states of charge (SOC2(1) to SOC2(b)) comprises:

generating a first input power based on the first output power, an efficiency ($\eta1$) of the first energy storage device (PS1), a conversion efficiency ($\eta3$) of the converter (11), and a first adjustment function ($\varphi1$);
generating a second input power based on the second output power, an efficiency ($\eta2$) of the second energy storage device (PS2), the conversion efficiency ($\eta3$) of the converter (11), and a second adjustment function ($\varphi2$);
generating a charging power based on the second output power, the efficiency ($\eta2$) of the second energy storage device (PS2), the conversion efficiency ($\eta3$) of the converter (11), and a third adjustment function ($\varphi3$); and
summing the first input power, the second input power, and the charging power to generate one of a plurality of total input powers of the management function ($J(\tau)$).

14. The power management method (S100) according to claim 13, wherein,

the efficiency ($\eta1$) of the first energy storage device (PS1) and the first adjustment function ($\varphi1$) are respectively associated with the first current state of charge (SOC1), and
the efficiency ($\eta2$) of the second energy storage device (PS2), the second adjustment function ($\varphi2$), and the third adjustment function ($\varphi3$) are respectively associated with the second current state of charge (SOC2).

15. The power management method (S100) according to claim 13, further comprising:
when the first energy storage device (PS1) outputs the first electric energy (PW1) and the second energy storage device (PS2) outputs the second electric energy (PW2), configuring the charging power to be equal to zero.

**FIG. 1**

FIG. 2

Receive a plurality of predetermined demand powers, a plurality of first predetermined states of charge of a first energy storage device, a plurality of second predetermined states of charge of a second energy storage device, and a plurality of predetermined time constants — S110

Generate a management function using the plurality of predetermined time constants, the plurality of predetermined demand powers, the plurality of first predetermined states of charge, and the plurality of second predetermined states of charge — S120

Receive a power demand command to obtain a current demand power, obtain a minimum input power from the management function based on the current demand power, the first state of charge of the first energy storage device, and the second state of charge of the second energy storage device, and provide an operating time constant corresponding to the minimum input power from the predetermined time constants — S130

Extract a low-frequency part of the power demand command based on the operating time constant, and control the first energy storage device to provide a first electric energy in response to the low-frequency part — S140

Subtract the low-frequency part from the power demand command to extract a high-frequency part of the power demand command, and control the second energy storage device to provide a second electric energy in response to the high-frequency part — S150

S100

## FIG. 3

FIG. 4

L1

L2

L3

L4

L5

PD(1)~PD(a)

SOC2(1)~SOC2(b)

SOC1(1)~SOC1(c)

$\tau(1)\sim\tau(d)$

$J(\tau)$

FIG. 5

| | Europäisches Patentamt European Patent Office Office européen des brevets | **EUROPEAN SEARCH REPORT** | **Application Number** EP 24 20 5135 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 092 695 B1 (ABB SCHWEIZ AG [CH]) 11 November 2020 (2020-11-11) * figures 1,2A-2C,6-8 * * paragraphs [0035], [0036], [0038], [0041], [0045], [0064], [0066] * ----- | 1-15 | INV. H02J3/32 H02J7/00 |
| A | US 2021/376615 A1 (HONZAWA SHINICHIRO [JP] ET AL) 2 December 2021 (2021-12-02) * abstract * * figures 1,2,5,7 * * paragraphs [0006], [0029], [0036] * * claim 1 * ----- | 1-15 | |

| | | | TECHNICAL FIELDS SEARCHED (IPC) |
|---|---|---|---|
| | | | H02J |

The present search report has been drawn up for all claims

| Place of search | Date of completion of the search | Examiner |
|---|---|---|
| Munich | 24 March 2025 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5135

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| EP 3092695 B1 | 11-11-2020 | BR 112016015798 A2 | 08-08-2017 |
| | | CA 2936440 A1 | 16-07-2015 |
| | | CN 106030953 A | 12-10-2016 |
| | | EP 3092695 A1 | 16-11-2016 |
| | | JP 6320539 B2 | 09-05-2018 |
| | | JP 2017508428 A | 23-03-2017 |
| | | KR 20160108420 A | 19-09-2016 |
| | | RU 2644415 C1 | 12-02-2018 |
| | | US 2015194820 A1 | 09-07-2015 |
| | | WO 2015105766 A1 | 16-07-2015 |
| US 2021376615 A1 | 02-12-2021 | EP 3916946 A1 | 01-12-2021 |
| | | JP 2021191095 A | 13-12-2021 |
| | | US 2021376615 A1 | 02-12-2021 |

EPO FORM P0459

For more details about this annex : see Official Journal of the European Patent Office, No. 12/82